# EUROPEAN PATENT SPECIFICATION

(11) **EP 2 698 843 B1**
(45) Date of publication and mention of the grant of the patent: **09.12.2015**
(21) Application number: 13180019.5
(22) Date of filing: 12.08.2013
(51) Int. Cl.: H01M 2/12

(54) **Storage battery with venting system which has combined filters**
Speicherbatterie mit Entlüftungssystem mit kombinierten Filtern
Batterie de stockage avec système de ventilation disposant de filtres combinés

(30) Priority: 14.08.2012 CN 201210286900
(43) Date of publication of application: 19.02.2014
(73) Proprietor: Camel Group Huazhong Branch Co., Ltd., Gucheng City, Hubei 441000 (CN)
(72) Inventor: Liu, Shizhong, 441000 Xiangyang City (CN); Wang, Tao, 441000 Xiangyang City (CN); Liu, Juan, 441000 Xiangyang City (CN); Xiao, Juntao, 441000 Xiangyang City (CN)
(74) Representative: Meyer-Dulheuer, Karl-Hermann

(56) References cited:
- EP-A2- 1 280 214
- WO-A1-99/48161
- JP-A- S 553 183
- US-A- 1 770 974

## Description

### Technical Field:

This utility model belongs to the technology field for maintenance free lead acid battery with double layer cover. It relates to a kind of storage battery with venting system which has combined filters.

### Background Technology:

Maintenance free lead acid battery consists of plates, and box which is composed of container, cover and venting lid. The space between cover and venting lid contains the backflow maze structure, the end of which is connected to the outside. This end part is venting system, usually composed of filters. The disadvantage is poor venting, and lack of sufficient acid baffle effect. So it's necessary to design a venting system with double layer filters and good venting effect.

### Contents of the Invention:

Aim at the above mentioned disadvantages, the object of this utility model is to design a maintenance free lead acid battery, whose venting system is composed of combined filters which has good venting and acid baffle effect.

The technical solution of this utility model is: A storage battery with combined filter venting system consists of plates and box which is composed of container, cover and venting lid. The space between cover and venting lid contains the backflow maze structure, the end of which is connected to the outside. This end part is venting system, which has the feature of: the stated venting system and the partitions form a gas path; in the path, there is a first filter and a second filter placed in series on the airflow direction.

In this utility model's technical solution, the stated first filter is vertical placed, and the second filter is horizontal placed.

In this utility model's technical solution, the stated first filter is square.

In this utility model's technical solution, the stated second filter is round.

In this utility model, there are two filters placed in series in the venting system which connects the end part of MF battery's maze structure and outside. Around the two filters, there are partitions which separate the gas path and other parts. The first filter is vertical placed, while the second is horizontal. Gas is vented smoothly through the two filters, and the acid baffle effect is also good. This utility model has overcome the disadvantage of the existing technology. It has the feature of good venting effect and acid baffle effect. This utility model mainly used for maintenance free lead acid battery's venting and filtering.

### Description of Figures:

Figure 1 shows the structure of this utility model.
Figure 2 shows A-A section view structure of partial figure 1.

### Mode of Execution:

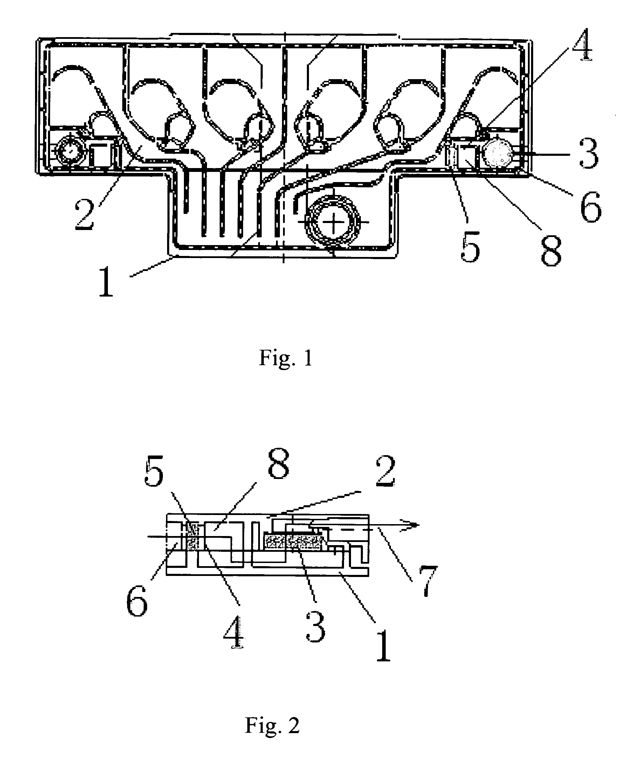

See figure 1 & 2. The storage battery with venting system which has double filters stated in this utility model consists of plates and box which is composed of container, cover1 and venting lid 2. The space between cover1 and venting lid 2 contains the backflow maze structure, and the end part of maze structure which connects to the outside is the venting system. The venting system and the partitions 4 which separate other parts form a gas path 6. In the gas path 6, there is a first filter 5 and a second filter 3 placed in series on airflow direction 7. The first filter5 which is square is vertical placed at the end of the maze structure. It's vertical placed in the square air chamber 8 in gas path6. The second filter 3 which is round is horizontal placed. And gas is vented out of the battery through the second filter 3. Both the first filter 5 and second filter 3 cover the whole cross section of the gas path 6.

## Claims

1. Storage battery with venting system which has combined filters, consisting of plates and box which is composed of a container, a venting lid(2) and a cover(1), wherein the space between the cover(1) and the venting lid(2) contains a backflow maze structure, wherein the end part of the maze structure which connects to the outside is the venting system, **characterized in that** a first filter (5) and a second filter (3) are placed in series on the airflow direction (7), wherein the first filter (5) is placed vertically in the square air chamber (8), and the first filter (5) and the second filter (3) is surrounded by partitions (4) which separate other parts and form a gas path (6).

2. Stated storage battery with venting system which has combined filters according to claim 1, **characterized in that** the stated first filter (5) is square.

3. Stated storage battery with venting system which has combined filters according to claim 1, **characterized in that** the stated second filter (3) is round.

## Patentansprüche

1. Akkumulator mit Entlüftungssystem, das Kombinationsfilter aufweist, die sich aus Platten und Kasten, der aus einem Behälter, einem Entlüftungsdeckel (2) und einer Abdeckung (1) besteht, zusammensetzen, wobei der Platz zwischen der Abdeckung (1) und dem Entlüftungsdeckel (2) eine Rückfluss-Labyrinthanordnung umfasst, wobei das Endstück der Labyrinthanordnung, die außen angeschlossen ist, das Entlüftungssystem ist, **dadurch gekennzeichnet, dass** ein erster Filter (5) und ein zweiter Filter (3) in Reihe in Luftströmungsrichtung (7) angeordnet sind, wobei der erste Filter (5) vertikal in der quadratischen Luftkammer (8) angeordnet ist, und der erste Filter (5) und der zweite Filter (3) von Abtrennungen (4) umgeben sind, die andere Teile separieren und einen Gaspfad (6) bilden.

2. Genannter Akkumulator mit Entlüftungssystem, das Kombinationsfilter nach Anspruch 1 aufweist, **dadurch gekennzeichnet, dass** der genannte erste Filter (5) quadratisch ist.

3. Genannter Akkumulator mit Entlüftungssystem, das Kombinationsfilter nach Anspruch 1 aufweist, **dadurch gekennzeichnet, dass** der genannte zweite Filter (3) rund ist.

## Revendications

1. Batterie d'accumulateurs avec système d'aération qui a des filtres combinés, composé de plaques et d'une boîte qui est composée d'un conteneur, un clapet d'aération (2) et d'un couvercle (1), dans lequel l'espace entre le couvercle (1) et le clapet d'aération (2) contient une structure en labyrinthe de reflux, dans laquelle la partie finale de la structure en labyrinthe qui raccorde à l'extéreur est le système d'aération, **caractérisée en ce qu'**un premier filtre (5) et un deuxième filtre (3) sont placés en série dans la direction de l'écoulement de l'air (7), dans laquelle le premier filtre (5) est placé verticalement dans la chambre d'air carrée (8) et le premier filtre (5) et le deuxième filtre (3) sont entourés par des cloisons (4) qui séparent les autres parties et forment une trajectoire de gaz (6).

2. Batterie d'accumulateurs mentionnée avec un système d'aération qui a des filtres combinés selon la revendication 1 **caractérisé en ce que** le premier filtre mentionné (5) est carré.

3. Batterie d'accumulateurs mentionnée avec un système d'aération qui a des filtres combinés selon la revendication 1 **caractérisé en ce que** le deuxième filtre mentionné (3) est rond.
